# EUROPÄISCHE PATENTSCHRIFT

(11) **EP 4 078 003 B1**
(45) Veröffentlichungstag und Bekanntmachung des Hinweises auf die Patenterteilung: **19.07.2023**
(21) Anmeldenummer: 22710382.7
(22) Anmeldetag: 04.03.2022
(51) Int. Cl.: F16L 55/00, F16G 11/04, F16G 11/14

(54) **HYDRAULIKEINHEIT**
HYDRAULIC UNIT
UNITÉ HYDRAULIQUE

(30) Priorität: 09.03.2021 DE 102021105591
(43) Veröffentlichungstag der Anmeldung: 26.10.2022
(73) Patentinhaber: Uniflex-Hydraulik GmbH, 61184 Karben (DE)
(72) Erfinder: BAUMGARTNER, Carsten, 35321 Laubach (DE); JARRASCH, Heidi, 61191 Nieder-Rosbach (DE)
(74) Vertreter: Grättinger Möhring von Poschinger Patentanwälte Partnerschaft mbB
(86) Internationale Anmeldenummer: PCT/EP2022/055525
(87) Internationale Veröffentlichungsnummer: WO 2022/189281

(56) Entgegenhaltungen:
- DE-U1- 8 703 122
- FR-A- 616 730
- US-A- 3 644 966
- US-A1- 2019 063 659

## Beschreibung

Die vorliegende Erfindung betrifft eine Hydraulikeinheit, umfassend ein Hydraulik-Bauteil und eine an einen Hydraulikanschluss des Hydraulik-Bauteils angeschlossene Hydraulikleitung, welche einen Hydraulikschlauch und ein mit diesem gefügtes, mit dem Hydraulikanschluss des Hydraulik-Bauteils verbundenes Fitting umfasst, wobei an dem Hydraulikschlauch eine Ausreißsicherung mit einer mittels einer Seilklemme gesicherten Seilschlinge angreift.

Aus vielen Bereichen der Technik ist Hydraulik nicht mehr wegzudenken. Die durch sie ermöglichte verlustarme Leistungsübertragung zwischen einem hydraulischen Geber (z. B. Hydraulikpumpe) und einem hydraulischen Nehmer (z. B. Hydraulikmotor, Hydraulikzylinder) mit hoher Leistungsdichte bei räumlicher Unabhängigkeit von Geber und Nehmer und gut beherrschbarer Technologie der Komponenten bietet eine einzigartige Vorteilskombination. Im Hinblick auf die Bewegbarkeit von hydraulischem Geber und hydraulischem Nehmer relativ zueinander wird deren Fluidverbindung regelmäßig (zumindest teilweise) durch einen Hydraulikschlauch, d. h. durch ein flexibles Rohr realisiert. Der betreffende Hydraulikschlauch ist dabei typischerweise endseitig mit Fittings gefügt. Besonders bewährt hat sich insoweit ein Radialverpressen mittels entsprechender Radialpressen (vgl. das Sortiment der Uniflex Hydraulik GmbH, Karben).

Trotz der hohen erzielbaren Qualität, Verlässlichkeit und Sicherheit bekannter Fügeverbindungen ist für diverse Anwendungen eine Ausreißsicherung zweckmäßig oder sogar vorgeschrieben. Dies gilt namentlich im Bereich besonders hoher Hydraulikdrücke und zwar insbesondere bei System mit Hydraulikspeichern oder kontinuierlichen Ölförderpumpen. Denn ein Ausreißen des Hydraulikschlauches aus dem Fitting führt in so einem Fall zu einem "Peitschen" des aus dem zugeordneten Fitting ausgerissenen Endes des Hydraulikschlauches mit der Folge einer erheblichen Gefährdung von sich in der Nähe aufhaltenden Personen. In diesem Zusammenhang einsetzbare Hydraulikschlauch-Ausreißsicherungen werden beispielsweise durch die Fa. Hydraulik Schmitz Siegen GmbH (unter der Marke Cable Lock ^{®}) vertrieben (vgl. auch EP 2 867 559 B1). Andere eingangs angegebene, jeweils eine Hydraulikschlauch-Ausreißsicherung der hier interessierenden Art (mit Seilschlinge) aufweisende Hydraulikeinheiten sind bekannt aus EP 2 193 304 B1, WO 2006/100702 A1, CN 205226703 U, CN 205689963 U, DE 20 2004 003 544 U1, EP 3 144 574 A1, US 3,197,240 A und US 3,813,733 A. Auch die US 2019/0063659 A1 offenbart eine gattungsgemäße, d. h. gemäß dem Oberbegriff des Anspruchs 1 ausgeführte Hydraulikeinheit. Das Sichern der Seilschlinge erfolgt hier durch Zusammenwirken der Seilklemme, welche das betreffende Seil bremsendverschiebbar umschließt, mit einem auf dem Seil fixierten Stopper; bei einer entsprechend hohen Zugbelastung des Seils zieht sich hierdurch die Seilschlinge gebremst, d. h. unter Energie-Dissipation zu. Im Hinblick auf anderweitig konzipierte Hydraulikschlauch-Ausreißsicherungen ist zu verweisen auf AU 2013101651 A4, DE 43 24 943 A1 und EP 0 728 982 A1.

Die FR 616 730 A offenbart eine Seilklemme, wie sie zur lösbaren Fixierung einer aus einem Seil geformten Seilschlinge einsetzbar ist. Die Seilklemme umfasst einen geschlitzten, einen etwa C-förmigen Querschnitt aufweisenden Klemmblock. Zwischen die beiden Abschnitte des die Seilschlinge bildenden Seils wird ein Keil eingeschoben, welcher - über gegen Herausziehen aus dem Klemmblock gesicherte Zwischenstücke - die besagten Seilabschnitte nach außen, gegen die den Durchgang begrenzende Innenwand des Klemmblocks spreizt. Der Keil wird in dem Klemmblock mittels einer Klemmschraube lagegesichert.

Aus der DE 87 03 122 U1 ist eine Klemm-Spannvorrichtung für Zugmittel bekannt, welche sich ebenfalls zur lösbaren Fixierung einer aus einem Seil geformten Seilschlinge einsetzen lässt. Die Klemm-Spannvorrichtung umfasst einen Grundkörper mit einem Querschlitz und einer in diesem mündenden Bohrung. In dieser Bohrung ist der Gewindeschaft einer Haken-, Augen oder Ösenschraube aufgenommen, durch deren Haken, Auge bzw. Öse die beiden die Seilschlinge bildenden Seilabschnitte hindurchgeführt sind. Durch Anziehen einer auf das aus dem Grundkörper herausstehenden freie Ende des Gewindeschafts der Haken-, Augen oder Ösenschraube aufgeschraubten Mutter wird das Seil in dem Querschlitz des Grundkörpers eingespannt.

Die US 3 644 966 A offenbart eine wiederum andere sich zur lösbaren Fixierung einer aus einem Seil geformten Seilschlinge eignende Klemm-Spannvorrichtung. Die Klemm-Spannvorrichtung umfasst einen Grundkörper mit zwei zueinander parallelen Seil-Bohrungen, durch welche das Seil hindurchführbar ist. Zwischen den beiden Seil-Bohrungen erstreckt sich, senkrecht zu der durch diese definierten Ebene, durch den Grundkörper hindurch eine Bohrung, in welcher ein um seine Achse drehbarer Knebel aufgenommen ist. Der Knebel weist ein flaches Querschnittsprofil auf dergestalt, dass in einer ersten Drehstellung das Seil durch die jeweilige Seil-Bohrung hindurch verschiebbar ist, wohingegen in einer zweiten Drehstellung des Knebels dieser die beiden Seilabschnitte in der jeweiligen Seil-Bohrung festklemmt.

Im Lichte des dargelegten Standes der Technik ist die vorliegende Erfindung darauf gerichtet, eine Hydraulikeinheit der eingangs angegebenen Art bereitzustellen, bei der sich die Hydraulikschlauch-Ausreißsicherung durch eine gegenüber dem Stand der Technik gesteigerte Praxistauglichkeit auszeichnet. Als insoweit besonders relevant sind neben der Zuverlässigkeit (einschließlich der Einhaltung eines reproduzierbaren Verhaltens im Falle einer Auslösung) diverse Gesichtspunkte der Handhabung (z. B. Bedarf an verschiedenen Komponenten für unterschiedliche Anwendungen, Zeitbedarf für die Anbringung, Risiko von Anwendungsfehlern, etc.) anzusehen.

Gelöst wird die vorstehend angegebene Aufgabenstellung gemäß der vorliegenden Erfindung durch die in Anspruch 1 angegebene Hydraulikeinheit. Demgemäß zeichnet sich die erfindungsgemäße Hydraulikeinheit durch eine Hydraulikschlauch-Ausreißsicherung aus, bei der die Seilklemme einen zwei einander kreuzende Durchgänge aufweisenden Klemmblock und einen Niet umfasst, wobei ein erster der beiden Durchgänge, durch den das Seil in Form einer - um den Hydraulikschlauch herum gelegten - Seilschlinge hindurchgeführt ist, im Bereich der Kreuzung mit dem zweiten Durchgang eine mindestens der doppelten Stärke des Seils zuzüglich des Durchmessers des unverformten Niets (in diesem Bereich) entsprechende Weite aufweist, der zweite Durchgang gestuft ausgeführt ist mit einem auf der einen Seite des ersten Durchgangs angeordneten engen Primärabschnitt und einem auf der anderen Seite des ersten Durchgangs angeordneten weiten Sekundärabschnitt und der Niet mit einem aufgeweiteten Endabschnitt die beiden durch den Klemmblock der Seilklemme hindurchgeführten Stränge des Seils gegen die die Mündung des Primärabschnitts des zweiten Durchgangs umgebende Innenwand des ersten Durchgangs verspannt.

Zur Fixierung der Seilschlinge wird der Niet, der den Klemmblock in dessen zweitem Durchgang zwischen den beiden Seilsträngen hindurchtretend durchdringt, in seinem in dem (weiten) Sekundärabschnitt des zweiten Durchgangs befindlichen Bereich axial gestaucht und aufgeweitet. Bei bevorzugter Verwendung eines als Blindniet ausgeführten Niets erfolgt dies mittels des Kopfes des - in Richtung auf den Nietkopf bzw. den (engen) Primärabschnitt des ersten Durchgangs gezogenen - Zugdorns. Der durch den Stauch- und Aufweitungsprozess gebildete Kragen drückt mit axialer Kraftkomponente auf die beiden beidseits von ihm befindlichen Seilstränge und klemmt diese gegen die gegenüberliegende Fläche des ersten Durchgangs, d. h. gegen die Innenwand des ersten Durchgangs benachbart der Mündung des Primärabschnitts des zweiten Durchgangs. Dies bewirkt, dass die beiden durch die Seilklemme hindurchgeführten Stränge des Seils sicher in dem Sinne fixiert sind, dass sie sich in dem Klemmblock nur unter erheblicher Krafteinwirkung bewegen können. Ohne eine solche Einwirkung erheblicher Kräfte bleibt die Geometrie der Seilschlinge unverändert.

Einer der besonders herauszustellenden Vorteile der Erfindung besteht in der ausgesprochen geringen Gefahr einer Fehlanwendung. Denn manuell anzuziehende Klemmschrauben (vgl. EP 2 867 559 B1) oder dergleichen sind bei der erfindungsgemäß zum Einsatz kommenden Hydraulikschlauch-Ausreißsicherung nicht vorgesehen. Die Klemmung des Seils besorgt vielmehr ein Niet (insbesondere ein Blindniet), bei dem sich fertigungsbedingt (insbesondere durch Ausführung des Zugdorns mit einer auf eine definierte vorgegebene Abreißkraft abgestimmten Sollbruchstelle) eine bestimmte Klemmkraft innerhalb vergleichsweise enger Toleranzen einstellen lässt. Dies erlaubt es, die Seilklemme so einzustellen, dass die Seilschlinge zwar hinreichend fixiert (s. o.) ist, solange die Hydraulikschlauch-Ausreißsicherung nicht ausgelöst ist, sich im Auslösefall aber zuverlässig um den Hydraulikschlauch herum zuzieht. Dies ist insoweit ein Aspekt hoher Relevanz, als er erlaubt, dass die Seilschlinge im Normalbetrieb des Hydraulikeinheit vergleichsweise locker bzw. lose um den Hydraulikschlauch herum gelegt ist. Dies wirkt einer Beschädigung des Hydraulikschlauches durch eine auf ihm scheuernde Seilschlinge entgegen. Auch im Übrigen zeichnet sich die bei der erfindungsgemäßen Hydraulikeinheit zum Einsatz kommende Ausreißsicherung durch eine hohe Anwendungssicherheit bei gleichzeitig besonders einfacher Anwendung unter Anbringung an der Hydraulikleitung in minimaler Zeit aus. Von der intuitiv richtigen Montage der Seilklemme profitiert die korrekte An- und Verwendung der Ausreißsicherung. Auch an die Werkzeugausstattung werden nur minimale Anforderungen gestellt; bei Ausführung des Niets als Blindniet reicht eine übliche Nietzange aus. Zudem lässt sich mit einer sehr geringen Anzahl unterschiedlicher Komponenten für die jeweilige Ausreißsicherung eine breite Palette von Anwendungen abdecken, so dass nur ein minimaler Lagerbedarf besteht.

Eine erste bevorzugte Weiterbildung der erfindungsgemäßen Hydraulikeinheit zeichnet sich dadurch aus, dass der Klemmblock parallel bzw. zumindest im Wesentlichen parallel zum ersten Durchgang dergestalt geschlitzt ist, dass die betreffende Schlitzöffnung ein Einlegen der Seilstränge in den ersten Durchgang von der Seite her erlaubt. Durch Einlegen des Seils in den ersten Durchgang von der Seite her erübrigt sich ein (zweimaliges) Durchfädeln des Seils durch den ersten Durchgang, wobei insbesondere das zweite Durchfädeln des freien Endes des Seils durch den ersten Durchgang hindurch neben dem sich bereits durch diesen hindurch erstreckenden Seilstrang mühsam sein kann. Zudem erlaubt eine solche geschlitzte Ausführung des Klemmblocks die Verwendung vorkonfektionierter, mit darauf aufgebrachten Stoppern (s. u.) ausgestatteter Seile. Auch die intuitiv richtige Handhabung (s. o.) der Ausreißsicherung kann von dieser Weiterbildung profitieren; denn die - dem Einlegen der beiden Seilstränge der Seilschlinge dienende - Schlitzöffnung gibt die "Bedienseite" der Seilklemme vor, von der - im Falle einer entsprechenden Ausgestaltung - auch der als Blindniet ausgeführte Niet einzusetzen und die Nietzange anzusetzen ist.

Die Schlitzöffnung, deren lichte Weite regelmäßig geringer sein sollte als die Weite des ersten Durchgangs, kann eine zumindest geringfügig oberhalb des doppelten Durchmessers des Seils liegende lichte Weite aufweisen; dies ermöglicht das gleichzeitige Einlegen der beiden Seilstränge einer vorgeformten Seilschlinge von der Seite. Besonders bevorzugt liegt die lichte Weite der Schlitzöffnung allerdings darunter, so dass die beiden Seilstränge nacheinander von der Seite her durch die Schlitzöffnung in den ersten Durchgang der Seilklemme einzulegen sind. Eine in diesem Sinne verhältnismäßig schmale Schlitzöffnung ist insbesondere auch im Hinblick auf eine gute Führung des Niets vorteilhaft. Die minimale Weite der Schlitzöffnung liegt geringfügig oberhalb des Durchmessers des Seils.

Besonders bevorzugt trifft die Schlitzöffnung etwa in dessen Mitte auf den ersten Durchgang, so dass der Klemmblock - in einer zu dem ersten Durchgang senkrechten Ebene - einen etwa C-förmigen Querschnitt aufweist. Ebenfalls ist in diesem Zusammenhang vorteilhaft, wenn der Primärabschnitt des zweiten Durchgangs mit der Schlitzöffnung des Klemmblocks fluchtet. Die hierdurch begünstigte Symmetrie der Kraftverteilung wirkt sich bei typischen Anwendungsfällen positiv auf das Betriebsverhalten aus. Unabhängig von dessen individueller Querschnittsform kann es in herstellungstechnischer Hinsicht vorteilhaft sein, wenn der Klemmblock gefertigt ist unter Ablängen eines Klemmblock-Rohlings von einem - beispielsweise mittels Strangpressens hergestellten - Profilstab.

Weitere unter dem Blickwinkel der Vermeidung von Montagefehlern attraktive Gesichtspunkte betreffen eine (z. B. farbliche) Markierung von Niet und/oder Klemmblock. So können insbesondere für eine bestimmte Anwendung (z. B. einen bestimmten Seildurchmesser) aufeinander abgestimmte Bauteile (Klemmblock und hierzu passender Niet) mit der identischen Farbe gekennzeichnet sein, so dass intuitiv richtige Paarungen gewählt werden, wobei insoweit zusätzlich auch die entsprechende (farbliche) Kennzeichnung des jeweils zugehörigen Seils besonders vorteilhaft ist. Auch ist durch (identische) farbliche Kennzeichnung des Nietkopfes sowie jener Seite des Klemmblocks, von der aus der Niet in diesen einzusetzen ist, eine unmittelbare Montage-Sichtkontrolle möglich. Auch eine anderweitige Kennzeichnung der betreffenden Seite des Klemmblocks (z. B. mittels Rillen, Riefen oder ähnlicher oberflächlicher Strukturierungen) kann in diesem Sinne, d. h. zur Vermeidung von Montagefehlern günstig sein, wobei namentlich intuitiv erfassbare Symbole (z. B. ein Kreis für den Nietkopf) zum Einsatz kommen können. Auch können der Nietkopf und/oder der Klemmblock - als Teile einer relevanten sicherheitstechnischen Einrichtung - in entsprechender Warn- bzw. Signalfarbe ausgeführt sein. Und mittels einer jeweiligen Farbe (von Niet und/oder Klemmblock) kann auch das Montagejahr codiert werden, um die Einhaltung von Zeitplänen für Prüfung bzw. Erneuerung zu erleichtern.

Eine weitere Möglichkeit, Montagefehler zu eliminieren, besteht in der werksseitigen Vorkonfektionierung der gesamten Ausreißsicherung umfassend Seil und Seilklemme(n), wobei das Seil bereits zu einer Seilschlinge gelegt und der Niet in den betreffenden Klemmblock eingesteckt sein kann. Die vorbereitete Seilschlinge wird vom Ende her über die Hydraulikleitung, d. h. über das Fitting bis zum Hydraulikschlauch geschoben, dort je nach Anforderung lockerer oder aber fester zugezogen und in der Stellung mittels der Seilklemme fixiert.

Gemäß einer anderen bevorzugten Weiterbildung der Erfindung weist die Seilschlinge ein aus dem Klemmblock herausstehendes freies Ende mit einem darauf fixierten Stopper auf. Der Stopper verhindert ein Durchziehen des freien Endes des Seils durch den Klemmblock (und dementsprechend ein Öffnen der Seilschlinge) im Falle der Einwirkung so hoher Kräfte auf die Seilschlinge, dass die durch den Niet auf diese ausgeübte Klemmkraft nicht (mehr) für eine Fixierung der Seilstränge ausreicht, so dass letztere sich, was im Hinblick auf ein Zuziehen der Seilschlinge unter Last durchaus erwünscht ist (s. o.), innerhalb des Klemmblocks bewegen können. In ganz besonders bevorzugter Ausgestaltung ist dabei zwischen dem Klemmblock und dem Stopper um das Seil herum ein Puffer angeordnet. Dieser kann beispielsweise als Schraubenfeder, Tellerfederpaket, Elastomerfeder oder dergleichen ausgeführt sein und dämpft ein mögliches Anschlagen des Stoppers auf dem Klemmblock bei rutschendem Seil.

Eine andere bevorzugte Weiterbildung der Erfindung zeichnet sich dadurch aus, dass das Seil der Ausreißsicherung als Endlosseil ausgeführt ist, wobei beidseitig jeweils eine Seilschlinge vorgesehen ist. In diesem Falle lässt sich zwar das weiter oben erläuterte Zuziehen der Seilschlinge(n) nicht ohne Weiteres realisieren. Dafür ergeben sich aber andere Vorteile wie insbesondere eine gesteigerte Reißfestigkeit.

Für typische Anwendungsfälle ist vorteilhaft, wenn der erste Durchgang einen ovalen Querschnitt aufweist, insbesondere indem sein Querschnitt durch zwei Halbkreise und zwei sich zwischen diesen erstreckende gerade Strecken begrenzt ist. So ergeben sich innerhalb des Klemmblocks günstige Kraftfluss-Verhältnisse.

Gemäß einer wiederum anderen bevorzugten Weiterbildung der Erfindung weist der Klemmblock auf seiner Außenfläche in der Umgebung der Mündung des Sekundärabschnitts des zweiten Durchgangs eine Vertiefung auf, in welcher ein Kopf des Niets zumindest teilweise aufgenommen ist. Dies ist nicht nur vorteilhaft im Hinblick auf die Bereitstellung möglichst glatter Oberflächen, d. h. die Vermeidung unnötiger vorspringender Strukturen. Auch unter Aspekten der Handhabung der Teile beim Montieren der Ausreißsicherung erweist sich dies als sehr günstig; denn durch die in die Oberfläche des Klemmblocks eingearbeitete Vertiefung ist unmittelbar und eindeutig ersichtlich, aus welcher Richtung der Niet in den ersten Durchgang einzustecken ist. Eine Fehlbedienung ist intuitiv ausgeschlossen.

Eine abermals andere bevorzugte Weiterbildung der Erfindung zeichnet sich dadurch aus, dass im Bereich der Schlinge das Seil von einem flexiblen Mantel umhüllt ist. Dieser Mantel ist bevorzugt lose auf das Seil aufgeschoben, so dass zwischen ihm und dem Seil etwas Spiel ist. Mittels eines derartigen Mantels lässt sich das Risiko einer Beschädigung von bewegten Hydraulikleitungen durch an ihnen scheuernde Ausreißsicherungen weiter reduzieren. Bei geeigneter Materialwahl kann zudem mittels des Mantels die Reibung der - im Auslösefall zugezogenen - Seilschlinge an dem Hydraulikschlauch und auf diese Weise die von der Ausreißsicherung auf diesen übertagbare Haltekraft erhöht werden.

In besonders bevorzugter Ausgestaltung der Erfindung sind auf dem Seil in regelmäßigen Abständen (z. B. alle 15 cm) Stopper fixiert, d. h. unlösbar und dauerhaft (z. B. mittels Verpressung) angebracht. Bei einem dementsprechend werksseitig vorkonfektionierten, d. h. mit Stoppern bestückten Seil entfällt die Notwendigkeit der Durchführung der sicherheitstechnisch relevanten (s. o.) Anbringung eines an dem freien Ende des Seiles vorgesehenen Stoppers vor Ort, d. h. unter Werkstattbedingungen. Dies ist unter dem Gesichtspunkt maximaler Zuverlässigkeit vorteilhaft. Die auf dem Seil fixierten Stopper sind dabei bevorzugt so dimensioniert, dass sie die ihnen zukommende Haltefunktion auch im Falle ihrer Halbierung noch erfüllen. So kann das Seil jeweils im Bereich (in der Mitte) eines Stoppers abgelängt werden, und die beiden entstehenden Enden sind bereits mit funktionstauglichen Stoppern versehen. Sind die Stopper durch auf das Seil - mittels Radialverpressung - aufgepresste Presshülsen gebildet, so ist unter fertigungstechnischen Aspekten vorteilhaft, wenn diese endseitig, d. h. an mindestens einer Stirnseite V-förmig gekerbt sind, beispielsweise durch Ablängen von einem Rohr durch Abscheren an einer V-förmigen Scherkante. Die V-förmig gekerbte Geometrie erleichtert substantiell das Einfädeln des Seils in die Prsshülsen-Bohrung.

Im Rahmen der Erfindung kann vorgesehen sein, dass das Seil, statt durchgehend ausgeführt zu sein, aus mindestens zwei über jeweils eine Feder miteinander verbundenen Abschnitten besteht. Eine solche Ausgestaltung ist dazu geeignet, zur Reduktion von harten, schlagartigen Beanspruchungen der Ausreißsicherung selbst und des Bauteils, an dem sie angeschlagen ist, beizutragen. Als Bauteil, an dem die Ausreißsicherung angeschlagen ist, kommen im Rahmen der vorliegenden Erfindung insbesondere das dem mittels der Ausreißsicherung gesicherten Ende der Hydraulikleitung zugeordnete Fitting in Betracht. Auch kann die Ausreißsicherung an dem Hydraulik-Bauteil angeschlagen sein, an das die Hydraulikleitung angeschlossen ist.

Zum Material der für die Ausreißsicherung verwendeten Bauteile ist festzustellen, dass für die meisten typischen Anwendungsfälle ein als Drahtseil ausgeführtes Seil und ein aus Stahl bestehender Klemmblock gut geeignet sind; und der Niet besteht typischerweise aus einer Aluminiumlegierung, bei einem Blindniet mit einem aus Stahl bestehenden Zugdorn. Allerdings können für bestimmte Anwendungen auch andere Werkstoffe zum Einsatz kommen, beispielsweise ein Seil aus Kevlar oder anderem hochfesten Kunstfaser-Material; und für den Klemmblock kommt auch die Herstellung aus einem - ggf. gefüllten - technischen Kunststoff in Betracht.

Im Folgenden wird die vorliegende Erfindung anhand eines in der Zeichnung veranschaulichten bevorzugten Ausführungsbeispiels näher erläutert. Dabei zeigt
- Fig. 1: eine an dem Hydraulikschlauch einer Hydraulikleitung angreifende Ausreißsicherung,
- Fig. 2: einen Längsschnitt durch die Ausreißsicherung nach Fig. 1 im Bereich des Klemmblocks,
- Fig. 3: den Klemmblock der Seilklemme (ohne Niet) der Ausreißsicherung nach den Figuren 1 und 2 in Draufsicht von oben und
- Fig. 4: den Klemmblock nach den Fig. 3 in stirnseitiger Ansicht; weiterhin veranschaulicht
- Fig. 5: beispielhaft die Verwendung der Ausreißsicherung nach den Figuren 1 bis 4 als Teil einer Hydraulikeinheit.

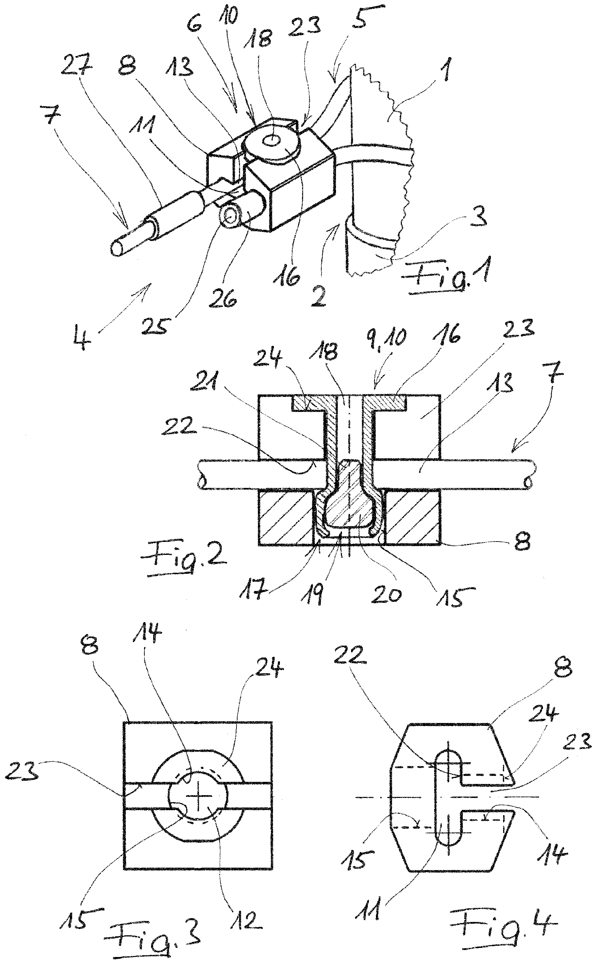

Gemäß Fig. 1 greift an den Hydraulikschlauch 1 einer Hydraulikleitung 2, welche an den Hydraulikanschluss eines - nicht dargestellten - Hydraulik-Bauteils angeschlossen und zu diesem Zweck mit einem endseitig angepressten Fitting 3 versehen ist, eine Ausreißsicherung 4 an. Diese umfasst eine um den Hydraulikschlauch 1 herum gelegte Seilschlinge 5, welche mittels einer Seilklemme 6 gesichert ist. Das andere Ende des - als Drahtseil ausgeführten - Seils 7, aus dem die Seilschlinge 5 geformt ist, kann, je nach den individuellen Gegebenheiten, in als solches bekannter Weise an dem Fitting 3 oder aber dem Hydraulik-Bauteil angeschlagen sein.

Die Seilklemme 6 umfasst einen aus Stahl gefertigten Klemmblock 8 und einen als Blindniet 9 ausgeführten Niet 10. Der Klemmblock 8 weist zwei einander kreuzende Durchgänge 11, 12 auf. Durch einen ersten Durchgang 11, welcher einen ovalen Querschnitt aufweist, ist das Seil 7 hindurchgeführt, und zwar - indem es zu der Seilschlinge 5 geformt ist - doppelt. So sind in dem ersten Durchgang 11 zwei Seilstränge 13 aufgenommen. In dem - den ersten Durchgang 11 orthogonal kreuzenden - zweiten Durchgang 12 ist der Niet 10 aufgenommen, und zwar dergestalt, dass er sich zwischen den beiden Seilsträngen 13 hindurch erstreckt. Im Bereich der Kreuzung mit dem zweiten Durchgang 12 weist der erste Durchgang 11 eine mindestens der doppelten Stärke des Seils 7 zuzüglich des Durchmessers des unverformten Niets 10 entsprechende Weite auf.

Der zweite Durchgang 12 ist in dem Sinne gestuft ausgeführt, dass die beiden durch den ersten Durchgang 11 voneinander getrennten Abschnitte unterschiedliche Durchmesser aufweisen. Somit verfügt der zweite Durchgang 12 über einen auf der einen Seite des ersten Durchgangs 11 angeordneten, engen Primärabschnitt 14 und einen auf der anderen Seite des ersten Durchgangs 11 angeordneten, weiten Sekundärabschnitt 15. Die Orientierung des Niets 10 in dem zweiten Durchgang 12 ist dabei dergestalt, dass sein dem Nietkopf 16 benachbarter, unverformter Bereich den Primärabschnitt 14 des zweiten Durchgangs 12 durchsetzt, wohingegen sein dem Nietkopf 16 abgewandter Endabschnitt 17 sich in dem Sekundärabschnitt 15 befindet. Der Endabschnitt 17 des Niets 10 ist - mittels des in Richtung auf den Nietkopf 16 hin in die Bohrung 18 des Niets 10 hinein gezogenen Zugdorns 19, von dem in Fig. 2 nur noch der im Niet 10 verbleibende, vom Schaft abgerissene Kopf 20 mit Schaftstummel 21 gezeigt ist - aufgeweitet. Er füllt den Sekundärabschnitt 15 des zweiten Durchgangs 12 aus und verspannt die beiden durch den Klemmblock 8 hindurchgeführten Seilstränge 13 gegen die die Mündung des Primärabschnitts 14 des zweiten Durchgangs 12 umgebende Innenwand 22 des ersten Durchgangs 11.

Um das Seil 7 von der Seite her in den Klemmblock 8 einlegen zu können, ist dieser parallel zum ersten Durchgang 11 geschlitzt, und zwar auf seiner den Primärabschnitt 14 des zweiten Durchgangs 12 aufweisenden Seite. Die entsprechende Schlitzöffnung 23 fluchtet mit dem Primärabschnitt 14 des zweiten Durchgangs 12 und durchschneidet diesen. In einer zum ersten Durchgang 11 senkrechten Ebene weist der Klemmblock 8 demnach einen C-förmigen Querschnitt auf (vgl. Fig. 4). An seiner Oberfläche weist der Klemmblock 8 um die Mündung des Primärabschnitts 14 des zweiten Durchgangs 12 herum eine Vertiefung 24 auf, welche zu dem Nietkopf 16 korrespondiert, so dass dieser versenkt in der besagten Vertiefung 24 aufgenommen ist.

Das freie Ende 25 der Seilschlinge 5, d. i. das nicht an dem Hydraulik-Bauteil bzw. Fitting 3 angeschlagene Ende des Seils 7, steht ein Stück weit aus dem Klemmblock 8 heraus. Auf ihm ist ein Stopper 26 fest angebracht, der ein Durchziehen eben jenes freien Endes 25 des Seils 7 durch den Klemmblock 8 hindurch sicher verhindert. Der Stopper 26 ist dabei gebildet durch eine halbe, d. h. in der Mitte durchgetrennte Aufpresshülse 27, wie sie in regelmäßigen Abständen auf dem Seil 7 fixiert sind.

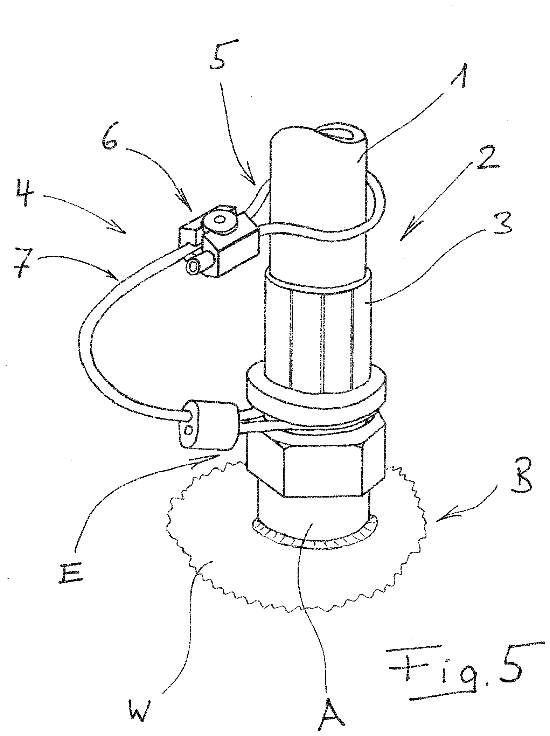

Gemäß Fig. 5 bildet die in den Figuren 1 bis 4 gezeigte Ausreißsicherung 4 einen Teil einer beispielhaft veranschaulichten Hydraulikeinheit. Diese umfasst über die vorstehend beschriebenen Teile hinausgehend ein Hydraulik-Bauteil in Form eines durch einen Abschnitt der Behälterwand W symbolisierten, über einen Hydraulikanschluss A verfügenden Behälters B. Das zweite Ende E des Seils 7 ist hier - wiederum über eine Schlinge - beispielhaft an dem Fitting 3 der Hydraulikleitung 2 angeschlagen, welches bestimmungsgemäß in bekannter Weise mit dem Hydraulikanschluss A des Behälters B verbunden ist.

## Patentansprüche

1. Hydraulikeinheit, umfassend ein Hydraulik-Bauteil und eine an einen Hydraulikanschluss des Hydraulik-Bauteils angeschlossene Hydraulikleitung (2), welche einen Hydraulikschlauch (1) und ein mit diesem gefügtes, mit dem Hydraulikanschluss des Hydraulik-Bauteils verbundenes Fitting (3) umfasst, wobei an dem Hydraulikschlauch (1) eine Ausreißsicherung (4) mit einer mittels einer Seilklemme (6) gesicherten Seilschlinge (5) angreift,
**dadurch gekennzeichnet,**
**dass** die Seilklemme (6) einen zwei einander kreuzende Durchgänge (11, 12) aufweisenden Klemmblock (8) und einen Niet (10) umfasst, wobei
- ein erster der beiden Durchgänge (11), durch den das Seil (7) in Form der Seilschlinge (5) hindurchgeführt ist, im Bereich der Kreuzung mit dem zweiten Durchgang (12) eine mindestens der doppelten Stärke des Seils (7) zuzüglich des Durchmessers des unverformten Niets (10) entsprechende Weite aufweist,
- der zweite Durchgang (12) gestuft ausgeführt ist mit einem auf der einen Seite des ersten Durchgangs (11) angeordneten engen Primärabschnitt (14) und einem auf der anderen Seite des ersten Durchgangs (11) angeordneten weiten Sekundärabschnitt (15) und
- der Niet (10) mit einem aufgeweiteten Endabschnitt (17) die beiden durch den Klemmblock (8) hindurchgeführten Stränge (13) des Seils (7) gegen die die Mündung des Primärabschnitts (14) des zweiten Durchgangs (12) umgebende Innenwand (22) des ersten Durchgangs (11) verspannt.

2. Hydraulikeinheit nach Anspruch 1, **dadurch gekennzeichnet, dass** der Klemmblock (8) zumindest im Wesentlichen parallel zum ersten Durchgang (11) dergestalt geschlitzt ist, dass die betreffende Schlitzöffnung (23) ein Einlegen der Seilstränge (13) in den ersten Durchgang (11) von der Seite erlaubt.

3. Hydraulikeinheit nach Anspruch 2, **dadurch gekennzeichnet, dass** der Klemmblock (8) in einer zum ersten Durchgang (11) senkrechten Ebene einen C-förmigen Querschnitt aufweist.

4. Hydraulikeinheit nach Anspruch 2 oder Anspruch 3, **dadurch gekennzeichnet, dass** der Primärabschnitt (14) des zweiten Durchgangs (12) mit der Schlitzöffnung (23) des Klemmblocks (8) fluchtet.

5. Hydraulikeinheit nach einem der Ansprüche 1 bis 4, **dadurch gekennzeichnet, dass** die Seilschlinge (5) ein aus dem Klemmblock (8) herausstehendes freies Ende (25) mit einem darauf fixierten Stopper (26) aufweist.

6. Hydraulikeinheit nach Anspruch 5, **dadurch gekennzeichnet, dass** zwischen dem Klemmblock (8) und dem Stopper (26) ein Puffer um das Seil (7) herum angeordnet ist.

7. Hydraulikeinheit nach einem der Ansprüche 1 bis 4, **dadurch gekennzeichnet, dass** das Seil (7) der Ausreißsicherung (4) als Endlosseil ausgeführt ist, wobei beidseitig eine Seilschlinge (5) vorgesehen ist.

8. Hydraulikeinheit nach einem der Ansprüche 1 bis 7, **dadurch gekennzeichnet, dass** der erste Durchgang (11) des Klemmblocks (8) einen ovalen Querschnitt aufweist.

9. Hydraulikeinheit nach einem der Ansprüche 1 bis 8, **dadurch gekennzeichnet, dass** ein Kopf (16) des Niets (10) zumindest teilweise in einer korrespondierenden, an der Oberfläche des Klemmblocks (8) vorgesehenen Vertiefung (24) aufgenommen ist.

10. Hydraulikeinheit nach einem der Ansprüche 1 bis 9, **dadurch gekennzeichnet, dass** der Niet (10) als Blindniet (9) ausgeführt ist.

11. Hydraulikeinheit nach einem der Ansprüche 1 bis 10, **dadurch gekennzeichnet, dass** im Bereich der Seilschlinge (5) das Seil (7) von einem flexiblen Mantel umhüllt ist.

12. Hydraulikeinheit nach einem der Ansprüche 1 bis 11, **dadurch gekennzeichnet, dass** auf dem Seil (7) in regelmäßigen Abständen Stopper, beispielsweise in Form von Aufpresshülsen (27), fixiert sind.

13. Hydraulikeinheit nach einem der Ansprüche 1 bis 12, **dadurch gekennzeichnet, dass** das Seil (7) aus mindestens zwei über eine Feder miteinander verbundenen Abschnitten besteht.

14. Hydraulikeinheit nach einem der Ansprüche 1 bis 13, **dadurch gekennzeichnet, dass** die Ausreißsicherung (4) an dem Fitting (3) angeschlagen ist.

15. Hydraulikeinheit nach einem der Ansprüche 1 bis 13, **dadurch gekennzeichnet, dass** die Ausreißsicherung (4) an dem Hydraulik-Bauteil angeschlagen ist.

16. Hydraulikeinheit nach einem der Ansprüche 1 bis 15, **dadurch gekennzeichnet, dass** der Niet (10) und/oder der Klemmblock (8) farblich und/oder durch Oberflächenstrukturierung gekennzeichnet sind.

17. Hydraulikeinheit nach Anspruch 16, **dadurch gekennzeichnet, dass** ein auf einen bestimmten Seildurchmesser abgestimmter Klemmblock (8) und ein hierzu passender Niet (10) mit der identischen Farbe gekennzeichnet sind.

## Claims

1. Hydraulic unit, comprising a hydraulic component and a hydraulic line (2) connected to a hydraulic connection of the hydraulic component, which comprises a hydraulic hose (1) and a fitting (3) connected to the hydraulic connection of the hydraulic component, wherein an pull-out-protection device (4) with a rope sling (5) secured by means of a rope clamp (6) engages on the hydraulic hose (1),
**characterized in that**
the rope clamp (6) comprises a terminal block (8) with two intersecting passages (11, 12) and a rivet (10), wherein
- a first of the two passages (11), through which the rope (7) in the form of the rope sling (5) has been guided, has a width equal to at least twice the thickness of the rope (7) plus the diameter of the undeformed rivet (10) in the area of the intersection with the second passage (12),
- the second passage (12) is designed in a step-shaped manner with a narrow primary section (14) arranged on one side of the first passage (11) and a wide secondary section (15) arranged on the other side of the first passage (11), and
- the rivet (10) with an expanded end section (17) braces the two strands (13) of the rope (7) passing through the clamping block (8) against the inner wall (22) of the first passage (11) surrounding the mouth of the primary section (14) of the second passage (12).

2. The hydraulic unit according to Claim 1, **characterized in that** the terminal block (8), being at least essentially parallel to the first passage (11), is slotted in such a way that the slot opening in question (23) permits the insertion of the rope strands (13) into the first passage (11) from the side.

3. The hydraulic unit according to Claim 2, **characterized in that** the terminal block (8) has a C-shaped cross-section on a plane perpendicular to the first passage (11) .

4. The hydraulic unit according to Claim 2 or Claim 3, **characterized in that** the primary section (14) of the second passage (12) aligns with the slot opening (23) of the terminal block (8).

5. Hydraulic unit according to any one of Claims 1 to 4, **characterized in that** the rope sling (5) comprises a free end (25) projecting from the terminal block (8) with a stopper (26) fixed on it.

6. The hydraulic unit according to Claim 5, **characterized in that** a buffer is arranged between the terminal block (8) and the stopper (26) around the rope (7).

7. Hydraulic unit according to any one of the Claims 1 to 4, **characterized in that** the rope (7) of the pull-out protection device (4) is designed as an endless rope, wherein a rope sling (5) is provided on both sides.

8. Hydraulic unit according to any one of Claims 1 to 7, **characterized in that** the first passage (11) of the terminal block (8) comprises an oval cross-section.

9. Hydraulic unit according to any one of the Claims 1 to 8, **characterized in that** a head (16) of the rivet (10) is at least partially accommodated in a corresponding recess (24) provided on the surface of the terminal block (8).

10. Hydraulic unit according to any one of the Claims 1 to 9, **characterized in that** the rivet (10) is designed as a blind rivet (9).

11. Hydraulic unit according to any one of the Claims 1 to 10, **characterized in that** in the area of the rope sling (5) the rope (7) is sheathed by means of a flexible sheathing.

12. Hydraulic unit according to any one of the Claims 1 to 11, **characterized in that** stoppers, in the form of press-on sleeves (27) for example, are fixed on the rope (7) at regular intervals.

13. The hydraulic unit according to any one of the Claims 1 to 12, **characterized in that** the rope (7) consists of at least two sections connected by a spring.

14. Hydraulic unit according to any one of the Claims 1 to 13, **characterized in that** the pull-out-protection device (4) is attached to the fitting (3).

15. Hydraulic unit according to any one of the Claims 1 to 13, **characterized in that** the pull-out-protection device (4) is attached to the hydraulic component.

16. Hydraulic unit according to any one of the Claims 1 to 15, **characterized in that** the rivet (10) and/or the terminal block (8) are marked in a colour-coded manner and/or marked by means of surface structuring.

17. The hydraulic unit according to Claim 16, **characterized in that** a terminal block (8) corresponding to a particular rope diameter and a rivet (10) corresponding to it are marked with the identical colour.

## Revendications

1. Groupe hydraulique, comprenant un composant hydraulique et une conduite hydraulique (2) raccordée sur un raccord hydraulique du composant hydraulique, laquelle comprend un flexible hydraulique (1) et un raccord (3) jointé sur celui-ci, assemblé avec le raccord hydraulique du composant hydraulique, sur le flexible hydraulique (1) s'engageant une sécurité anti-arrachement (4) pourvue d'une élingue (5) sécurisée au moyen d'un pince-câble (6),
**caractérisé**
**en ce que** le pince-câble (6) comprend un bornier (8) comportant deux passages (11, 12) qui se croisent et un rivet (10),
- un premier des deux passages (11), à travers lequel la câble (7) passe sous la forme de l'élingue (5), présentant dans la zone du croisement avec le deuxième passage (12) une largeur correspondant au moins à la double épaisseur du câble (7) plus le diamètre du rivet (10) non déformé,
- le deuxième passage (12) étant réalisé sous forme échelonnée, avec une partie primaire (14) étroite, placée sur l'une des faces du premier passage (11) et une partie secondaire (15) large, placée sur l'autre face du premier passage(11)
- le rivet (10) contraignant avec une partie d'extrémité (17) élargie les deux faisceaux (13) du câble (7) passés à travers le bornier (8) contre la paroi interne (22) du premier passage (11) entourant l'embouchure de la partie primaire (14) du deuxième passage (12).

2. Groupe hydraulique selon la revendication 1, **caractérisé en ce que** le bornier (8) est fendu au moins sensiblement à la parallèle du premier passage (11), de telle sorte que l'orifice en fente (23) concerné permette une insertion des faisceaux de câble (13) dans le premier passage (11) à partir du côté.

3. Groupe hydraulique selon la revendication 2, **caractérisé en ce que** dans un plan perpendiculaire au premier passage (11), le bornier (8) comporte une section transversale en forme de C.

4. Groupe hydraulique selon la revendication 2 ou la revendication 3, **caractérisé en ce que** la partie primaire (14) du deuxième passage (12) est en alignement sur l'orifice en fente (23) du bornier (8).

5. Groupe hydraulique selon l'une quelconque des revendications 1 à 4, **caractérisé en ce que** l'élingue (5) comporte une extrémité (25) libre débordant du bornier (8) pourvue d'un butoir (26) fixé sur celle-ci.

6. Groupe hydraulique selon la revendication 5, **caractérisé en ce qu'**entre le bornier (8) et le butoir (26), un tampon est placé autour du câble (7).

7. Groupe hydraulique selon l'une quelconque des revendications 1 à 4, **caractérisé en ce que** le câble (7) de la sécurité anti-arrachement (4) est conçu sous la forme d'un câble continu, une élingue (5) étant prévue de part et d'autre.

8. Groupe hydraulique selon l'une quelconque des revendications 1 à 7, **caractérisé en ce que** le premier passage (11) du bornier (8) comporte une section transversale ovale.

9. Groupe hydraulique selon l'une quelconque des revendications 1 à 8, **caractérisé en ce qu'**une tête (16) du rivet (10) est réceptionnée au moins en partie dans un creux (24) correspondant, prévu sur la surface du bornier (8).

10. Groupe hydraulique selon l'une quelconque des revendications 1 à 9, **caractérisé en ce que** le rivet (10) est réalisé sous la forme d'un rivet borgne (9).

11. Groupe hydraulique selon l'une quelconque des revendications 1 à 10, **caractérisé en ce que** dans la zone de l'élingue (5), le câble (7) est enrobé d'une enveloppe souple.

12. Groupe hydraulique selon l'une quelconque des revendications 1 à 11, **caractérisé en ce que** sur le câble (7), des butoirs, par exemple sous la forme de douilles de sertissage (27), sont fixés à intervalles réguliers.

13. Groupe hydraulique selon l'une quelconque des revendications 1 à 12, **caractérisé en ce que** le câble (7) est constitué d'au moins deux partie assemblées l'une à l'autre par l'intermédiaire d'un ressort.

14. Groupe hydraulique selon l'une quelconque des revendications 1 à 13, **caractérisé en ce que** la sécurité anti-arrachement (4) est accrochée sur le raccord (3).

15. Groupe hydraulique selon l'une quelconque des revendications 1 à 13, **caractérisé en ce que** la sécurité anti-arrachement (4) est accrochée sur le composant hydraulique.

16. Groupe hydraulique selon l'une quelconque des revendications 1 à 15, **caractérisé en ce que** le rivet (10) et / ou le bornier (8) sont **caractérisés par** une couleur et / ou par leur structuration superficielle.

17. Groupe hydraulique selon la revendication 16, **caractérisé en ce qu'**un bornier (8) adapté pour un diamètre de câble précis et un rivet (10) lui correspondant sont **caractérisés par** une couleur identique.
